# EUROPEAN PATENT APPLICATION

(11) **EP 4 037 117 A1**
(43) Date of publication of application: **03.08.2022**
(21) Application number: 20869479.4
(22) Date of filing: 08.09.2020
(51) Int. Cl.: H02B 1/30

(54) **POWER SUPPLY CABINET**

(30) Priority: 27.09.2019 CN 201921639534 U
(71) Applicant: BYD Company Limited, Shenzhen, Guangdong 518118 (CN)
(72) Inventor: GAO, Yunjie, Shenzhen, Guangdong 518118 (CN); YANG, Qing, Shenzhen, Guangdong 518118 (CN); YANG, Ke, Shenzhen, Guangdong 518118 (CN); XU, Guangdong, Shenzhen, Guangdong 518118 (CN); LV, Minghai, Shenzhen, Guangdong 518118 (CN)
(74) Representative: Haseltine Lake Kempner LLP
(86) International application number: PCT/CN2020/114035
(87) International publication number: WO 2021/057466

(57) **Abstract**

The disclosure relates to the technical field of batteries and provides a power cabinet. The power cabinet includes a base and a plurality of battery modules and a main control module stacked on the base. The plurality of battery modules are all electrically connected to the main control module to be controlled by the main control module. The main control module includes: a main body, having a cavity; a panel, mounted to the main body and configured to expose and cover the cavity; and a micro switch, disposed on the main body, where when the panel is in a state of exposing the cavity, the micro switch is triggered or released to power off the power cabinet.

## Description

### CROSS-REFERENCE TO RELATED APPLICATIONS

The disclosure claims priority to Chinese Patent Application No. 201921639534.3, filed with the China National Intellectual Property Administration on September 27, 2019 and entitled "POWER CABINET", which is incorporated herein by reference in its entirety.

### FIELD

The disclosure relates to the technical field of batteries, and more specifically, to a power cabinet.

### BACKGROUND

In related arts, an operator is required to open a panel of the main control module when wiring a main control module of a power cabinet. At this time, if the operator forgets to turn off an air switch or performs misoperation, a high-voltage electric shock may be caused, and the safety is poor.

### SUMMARY

The disclosure provides a power cabinet, to avoid a high voltage electric shock, thereby improving the safety.

An embodiment of the disclosure provides a power cabinet, including: a base; and a plurality of battery modules and a main control module, stacked on the base, where the plurality of battery modules are all electrically connected to the main control module to be controlled by the main control module; and the main control module includes: a main body, having a cavity; a panel, mounted to the main body and configured to expose and cover the cavity; and a micro switch, disposed on the main body, where when the panel is in a state of exposing the cavity, the micro switch is triggered or released to power off the power cabinet.

According to the power cabinet in this embodiment of the disclosure, the micro switch is disposed on the main body of the main control module. In this way, the power cabinet may be powered off when an operator opens a panel to perform an operation. Even if the operator forgets to turn off an air switch or performs misoperation, the risk of a high voltage electric shock is not caused, which greatly improves the safety during use.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a schematic structural diagram of a power cabinet according to an embodiment of the disclosure.
FIG. 2 is an exploded view of a power cabinet according to an embodiment of the disclosure.
FIG. 3 is a schematic structural diagram of a power cabinet according to an embodiment of the disclosure.
FIG. 4 is a schematic diagram of linkage of a micro switch of a power cabinet according to an embodiment of the disclosure.
FIG. 5 is a schematic diagram of a bottom structure of a power cabinet according to an embodiment of the disclosure.
FIG. 6 is a schematic diagram of a top structure of a battery module of a power cabinet according to an embodiment of the disclosure.
FIG. 7 is a schematic diagram of a bottom structure of a battery module of a power cabinet according to an embodiment of the disclosure.
FIG. 8 is a schematic structural diagram of a base of a power cabinet according to an embodiment of the disclosure.
FIG. 9 is a cross-sectional view of a power cabinet according to an embodiment of the disclosure.

### Reference Numerals:

Power cabinet 1,
Base 100,
Battery module 200,
Main control module 300, Main body 310, Cavity 311, Panel 320, Upper turnup 321, Lower turnup 322, Step portion 323, Side turnup 324, Inner turnup 325, Micro switch 330, Contact 331, Elastic piece 332, Threaded fastener 340,
Pin hole 410, Positioning pin 420, Locking hole 421, Flat surface 422, Threaded locking member 430, Accommodating groove 440, Plug 450,
Hot plug male terminal 510, Hot plug female terminal 520, Slot 530, and Fence 540.

### DETAILED DESCRIPTION

The following describes embodiments of the present disclosure in detail. Examples of the embodiments are shown in the accompanying drawings, and same or similar reference numerals in all the accompanying drawings indicate same or similar components or components having same or similar functions. The embodiments described below with reference to the accompanying drawings are exemplary, and are merely intended to explain the present disclosure and cannot be construed as a limitation to the present disclosure.

In the description of the disclosure, it should be understood that orientation or position relationships indicated by the terms such as "upper", "lower", "top", "bottom", "inner", "outer", "axial", "radial", "circumferential", and the like are based on orientation or position relationships shown in the accompanying drawings, and are used only for ease and brevity of illustration and description of the disclosure, rather than indicating or implying that the mentioned apparatus or element needs to have a particular orientation or needs to be constructed and operated in a particular orientation. Therefore, such terms should not be construed as a limitation on the disclosure. In the description of the disclosure, "a plurality of" means two or more.

A power cabinet 1 according to the embodiments of the disclosure is first described with reference to the accompanying drawings. The power cabinet 1 is applicable to a new battery and a recycled battery.

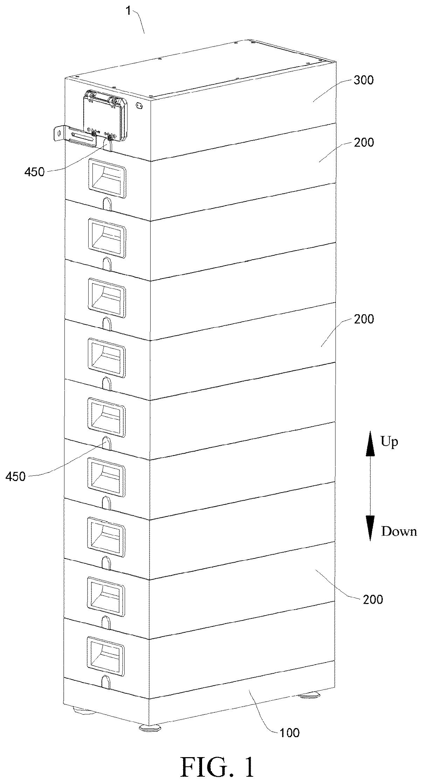

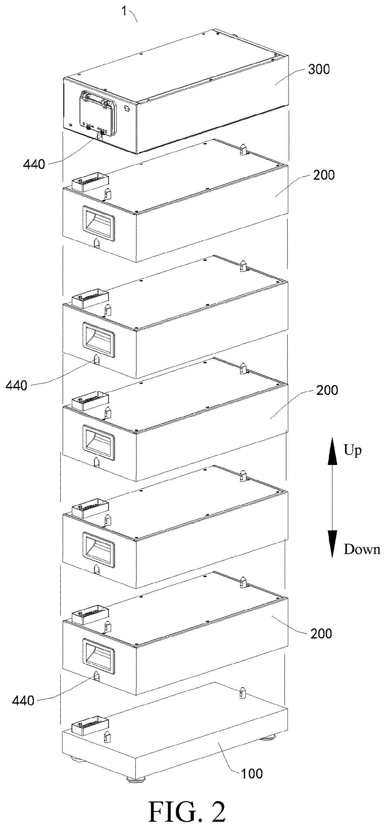

As shown in FIG. 1 and FIG. 2, the power cabinet 1 according to the embodiments of the disclosure includes a base 100, a plurality of battery modules 200, and a main control module 300.

The plurality of battery modules 200 and the main control module 300 are stacked on the base 100, and the plurality of battery modules 200 are electrically connected with the main control module 300 to be controlled by the main control module 300. For example, the base 100, the plurality of battery modules 200, and the main control module 300 are sequentially stacked from bottom to top. The plurality of battery modules 200 are controlled and managed by the main control module 300.

The main control module 300 of the power cabinet 1 according to the embodiments of the disclosure is described below with reference to the accompanying drawings.

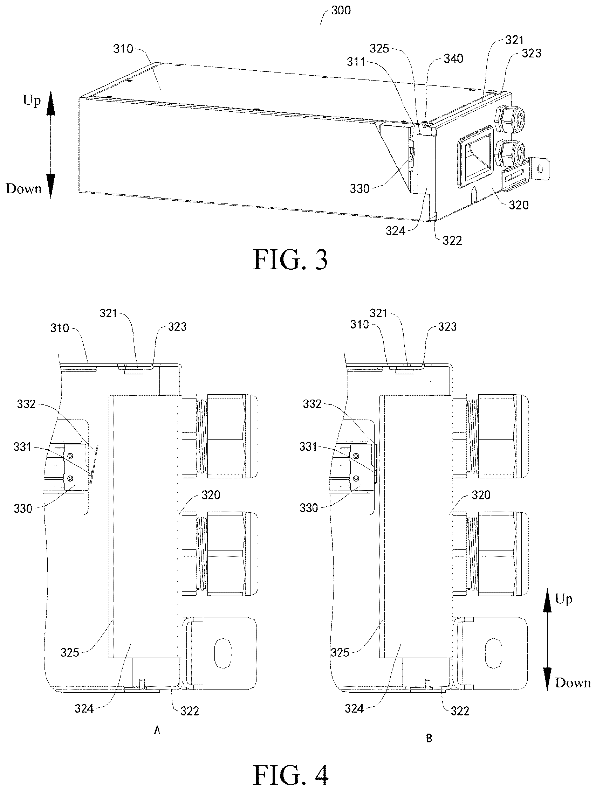

As shown in FIG. 3 and FIG. 4, the main control module 300 according to the embodiments of the disclosure includes a main body 310, a panel 320, and a micro switch 330.

The main body 310 has a cavity 311. The panel 320 is mounted to the main body 310 and is configured to expose and cover the cavity 311. For example, the panel 320 may be detachably mounted to the main body 310, and the panel 320 may also be rotatably mounted to the main body 310, or the like. The micro switch 330 is disposed on the main body 310.

When the panel 320 is in a state of exposing the cavity 311, the panel 320 triggers or releases the micro switch 330 to power off the power cabinet 1.

In the power cabinet 1 of the embodiment of the disclosure, the micro switch 330 is disposed on the main body 310 of the main control module 300, so that a change in a position of the panel 320 is interlinked to the micro switch 330 when an operator opens the panel 320 to perform operations such as a wiring operation, thereby powering off the power cabinet 1. In this way, even if the operator forgets to turn off an air switch or performs misoperation, since the power cabinet 1 is in a power-off state at this time, the danger of a high voltage electric shock is not caused, which greatly improves the safety during use.

Therefore, the power cabinet 1 in this embodiment of the disclosure can avoid the occurrence of the high voltage electric shock, thereby improving the safety.

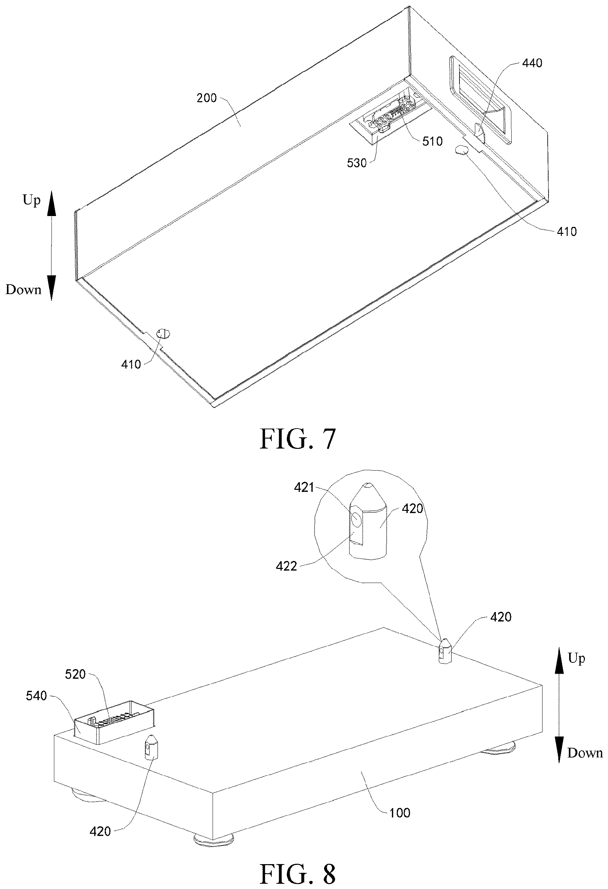

In some specific examples of the disclosure, as shown in FIG. 1, FIG. 2, and FIG. 5 to FIG. 8, a hot plug male terminal 510 is disposed on a lower surface of the main control module 300 and a lower surface of each of the battery modules 200, and a hot plug female terminal 520 mated with the corresponding hot plug male terminal 510 is disposed on an upper surface of the base 100 and an upper surface of the each battery module 200.

In a feasible implementation, the hot plug male terminal 510 on a lower surface of the lowermost battery module 200 is inserted into the hot plug female terminal 520 on the upper surface of the base 100. The hot plug male terminal 510 on the lower surface of the upper battery module 200 is inserted into the hot plug female terminal 520 on the upper surface of the lowermost battery module 200. The insertion is performed in the similar manner for the plurality of battery modules 200. The hot plug male terminal 510 on the lower surface of the main control module 300 is inserted into the hot plug female terminal 520 on the upper surface of the uppermost battery module 200. In this way, the overall electrical connection of the power cabinet 1 is implemented, thereby performing the transmission of signals and power.

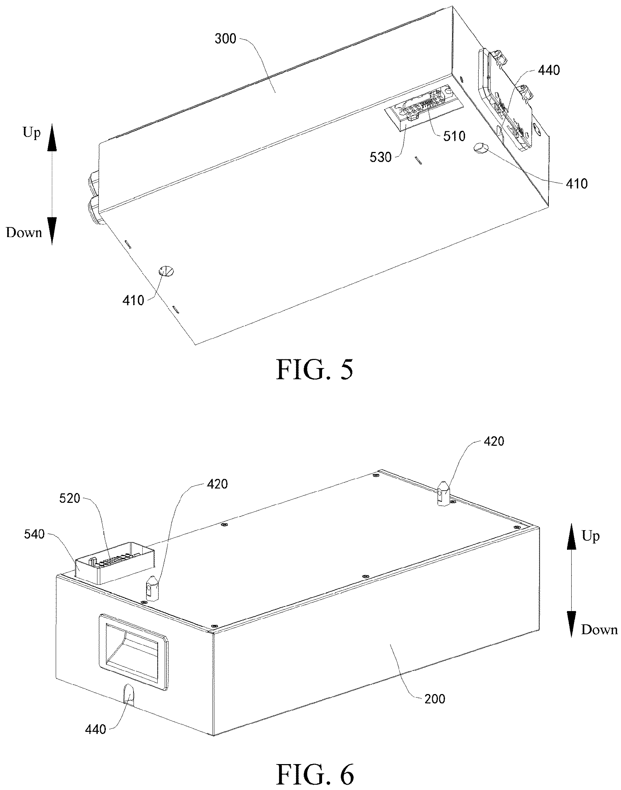

In a feasible implementation, as shown in FIG. 5 to FIG. 8, a slot 530 configured to accommodate the corresponding hot plug male terminal 510 is provided on the lower surface of the main control module 300 and the lower surface of each of the battery modules 200, and a fence 540 surrounding the corresponding hot plug female terminal 520 and extending into the corresponding slot 530 is disposed on the upper surface of the base 100 and the upper surface of each of the battery modules 200. The slot 530 and the fence 540 may be rectangles mated with each other. Through arrangement of the slot and the fence, on the one hand, the modules may be closely attached after being connected, to cause the structure of the power cabinet 1 to be more compact. On the other hand, the arrangement may facilitate positioning, so as to ensure that the hot plug male terminal 510 can be accurately aligned with the hot plug female terminal 520 that are required to be connected with each other, thereby improving the stability of relative positions of the upper and lower modules. In addition, the slot 530 can protect the hot plug male terminal 510, and the fence 540 can protect the hot plug female terminal 520.

In some specific embodiments of the disclosure, when the panel 320 is in the state of exposing the cavity 311, the micro switch 330 is released, to power off the power cabinet 1, which improves the safety. When the panel 320 is in the state of covering the cavity 311, the micro switch 330 is triggered, and the power cabinet 1 is automatically powered on.

In a feasible implementation, as shown in FIG. 4, the micro switch 330 is disposed in the cavity 311 of the main body 310 and is disposed adjacent to a side wall of the main body 310. The micro switch 330 has a contact 331 and an elastic piece 332. The contact 331 and the elastic piece 332 are disposed facing the panel 320. When the micro switch 330 is triggered, the elastic piece 332 is stressed to come into contact with the contact 331. When the micro switch 330 is released, an elastic force of the elastic piece 332 causes the elastic piece to be separated from the contact 331.

As shown in A in FIG. 4, when the panel 320 is in the state of exposing the cavity 311, an elastic force of the elastic piece 332 causes the elastic piece to be separated from the contact 331, so that the power cabinet 1 is powered off.

As shown in B in FIG. 4, when the panel 320 is in the state of covering the cavity 311, the elastic piece 332 is squeezed by the panel 320 to come into contact with the contact 331, so that the power cabinet 1 is powered on.

In some specific examples of the disclosure, as shown in FIG. 3 and FIG. 4, the main body 310 has a wiring port (not shown in the figure) located in the cavity 311, and the panel 320 is detachably mounted to a side surface of the main body 310. When the panel 320 is in the state of exposing the cavity 311, the wiring port is exposed to facilitate wiring.

In a feasible implementation, an upper edge of the panel 320 is configured with an upper turnup 321, and a lower edge of the panel 320 is configured with a lower turnup 322. The upper turnup 321 and the lower turnup 322 both extend into the cavity 311 of the main body 310. The upper turnup 321 is configured with a step portion 323. When the panel 320 is in the state of covering the cavity 311, the step portion 323 abuts against the main body 310 to be limited. The upper turnup 321 and the lower turnup 322 are respectively mounted to the main body 310 by using a threaded fastener 340 (for example, a bolt or a screw).

In a feasible implementation, a side edge of the panel 320 is configured with a side turnup 324, and a side of the side turnup 324 away from the panel 320 is configured with an inner turnup 325 extending toward inside of the cavity 311. The inner turnup 325 is disposed opposite to the elastic piece 332.

Therefore, when the panel 320 is in the state of exposing the cavity 311, the inner turnup 325 is separated from the elastic piece 332 of the micro switch 330. When the panel 320 is in the state of covering the cavity 311, the inner turnup 325 snugly presses the elastic piece 332 to the contact 331. At this point, the inner turnup 325 and the elastic piece 332 are disposed in parallel to ensure the stability of the micro switch 330 after being triggered, thereby ensuring the reliability of the power cabinet 1 after being powered on. A platform for reliably triggering the micro switch 330 is formed by the inner turnup 325.

In some specific embodiments of the disclosure, as shown in FIG. 5 to FIG. 9, pin holes 410 are provided on the lower surface of the main control module 300 and the lower surface of each of the battery modules 200, and positioning pins 420 mated with the corresponding pin holes 410 are disposed in the upper surface of the base 100 and the upper surface of each of the battery modules 200. In this way, the upper module and the lower module are fixed.

In a feasible implementation, each of the positioning pins 420 is configured with a locking hole 421 (such as a threaded hole), and a threaded locking member 430 (such as a screw or a bolt) is disposed on the main control module 300 and each of the battery modules 200. Each of the threaded locking members 430 extends into the pin hole 410 of the main control module 300 or the battery module 200 and is mated with the locking hole 421 of the positioning pin 420 in the pin hole 410.

In a feasible implementation, the positioning pin 420 on the upper surface of the base 100 is inserted into the pin hole 410 on the lower surface of the lowermost battery module 200, and the threaded locking member 430 on the lowermost battery module 200 is locked with the positioning pin 420 on the upper surface of the base 100. The positioning pin 420 on the upper surface of the lowermost battery module 200 is inserted into the pin hole 410 on the lower surface of the upper battery module 200, and the threaded locking member 430 on the upper battery module 200 is locked with the positioning pin 420 on the upper surface of the lowermost battery module 200. The plurality of battery modules 200 are positioned and locked in a similar manner. The positioning pin 420 on the upper surface of the uppermost battery module 200 is inserted into the pin hole 410 on the lower surface of the main control module 300, and the threaded locking member 430 on the main control module 300 is locked with the positioning pin 420 on the upper surface of the uppermost battery module 200.

In the power cabinet in related arts, the battery modules and the main control module are also stacked on the base, but two adjacent modules are fixed by a side lock. A relatively large number of side locks are required for the entire power cabinet. The structure of the side lock itself is relatively complex and the costs are not low, resulting in relatively high costs of the entire power cabinet. However, in the power cabinet 1 in the embodiments of the disclosure, the arrangement of the pin holes 410, the positioning pins 420, and the threaded locking members 430 not only can realize interlocking between the modules, but also can accurately locate the relative positions of the upper module and the lower module. In this way, a segment gap between the upper module and the lower module is reduced, thereby improving the overall stability of the power cabinet 1, and reducing the costs.

In a feasible implementation, an end of the positioning pin 420 may be configured as a pointed structure to be easily inserted into the pin hole 410. An outer peripheral surface of the positioning pin 420 is configured with a flat surface 422, and the locking hole 421 is formed on the flat surface 422. Therefore, it is not only convenient to machine the locking hole 421 on the positioning pin 420, but also convenient to screw in the threaded locking member 430, so as to ensure the reliability after connection.

In some specific examples of the disclosure, as shown in FIG. 1, FIG. 2, and FIG. 5 to FIG. 9, a side surface of the main control module 300 and a side surface of each of the battery modules 200 are configured with accommodating grooves 440 for accommodating corresponding threaded locking members 430. In this way, the threaded locking member 430 is disposed in the accommodating groove 440, so that an appearance of the power cabinet 1 is neater, and the operation on the threaded locking member 430 is not affected.

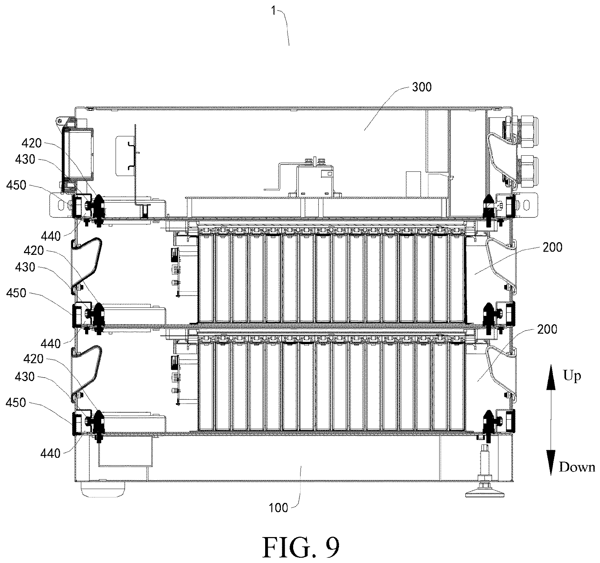

In a feasible implementation, as shown in FIG. 1 and FIG. 9, plugs 450 configured to block the corresponding accommodating grooves 440 are disposed on the side surface of the main control module 300 and the side surface of each of the battery modules 200. As a result, the appearance of the power cabinet 1 may be further improved, and sundries and the like can be prevented from entering the accommodating grooves 440.

In some examples of the disclosure, as shown in FIG. 5 to FIG. 9, in order to improve the reliability of the interlocking of the upper module and the lower module, and in a case that the structure and costs are ensured, two pin holes 410 are provided on the main control module 300 and each of the battery modules 200. The two pin holes 410 are located at the center in a width direction of the main control module 300 or the battery module 200 where the pin hole is located, and are disposed respectively adjacent to two ends in a length direction of the main control module 300 or the battery module 200 where the pin hole is located. Two positioning pins 420 are disposed on the base 100 and each of the battery modules 200. The two positioning pins 420 are located at the center in a width direction of the base 100 or the battery module 200 where the positioning pin is located, and are disposed respectively adjacent to two ends in a length direction of the base 100 or the battery module 200 where the positioning pin is located. Through the arrangement of the threaded locking members 430, the accommodating grooves 440, and the plugs 450, the specific numbers and positions are set according to the mating of the positioning pins 420 with the pin holes 410.

Other configurations and operations of the power cabinet 1 according to the embodiments of the disclosure are known to those of ordinary skill in the art, and are not described in detail herein again.

In the description of the specification, the description of reference terms such as "specific embodiments", "specific examples" means that specific features, structures, materials, or characteristics described in combination with the embodiment or example are included in at least one embodiment or example of the disclosure. In this specification, schematic descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A power cabinet, comprising:
a base; and
a plurality of battery modules and a main control module, stacked on the base, wherein the plurality of battery modules are electrically connected to the main control module to be controlled by the main control module; and
the main control module comprises:
a main body, having a cavity;
a panel, mounted to the main body and configured to expose and cover the cavity; and
a micro switch, disposed on the main body, wherein
when the panel is in a state of exposing the cavity, the micro switch is triggered or released to power off the power cabinet.

2. The power cabinet according to claim 1, wherein
when the panel is in the state of exposing the cavity, the micro switch is released to power off the power cabinet; and
when the panel is in a state of covering the cavity, the micro switch is triggered to power on the power cabinet.

3. The power cabinet according to claim 2, wherein the micro switch is disposed in the cavity of the main body and adjacent to a side wall of the main body; the micro switch has a contact and an elastic piece facing the panel;
when the panel is in the state of exposing the cavity, an elastic force of the elastic piece causes the elastic piece to be separated from the contact; and
when the panel is in the state of covering the cavity, the elastic piece is squeezed by the panel to come into contact with the contact.

4. The power cabinet according to any of claims 1 to 3, wherein the main body has a wiring port located in the cavity; the panel is detachably mounted to a side surface of the main body; and the wiring port is exposed when the panel is in the state of exposing the cavity.

5. The power cabinet according to claim 4, wherein an upper edge of the panel is configured with an upper turnup; a lower edge thereof is configured with a lower turnup; the upper turnup and the lower turnup are mounted to the main body by using a threaded fastener;
the upper turnup and the lower turnup both extend into the cavity of the main body; the upper turnup is configured with a step portion; and when the panel is in the state of covering the cavity, the step portion abuts against the main body.

6. The power cabinet according to claim 4 or 5, wherein a side edge of the panel is configured with a side turnup; the side turnup is configured with an inner turnup;
when the panel is in the state of exposing the cavity, the inner turnup is separated from the micro switch; and
when the panel is in the state of covering the cavity, the inner turnup triggers the micro switch.

7. The power cabinet according to any of claims 1 to 6, wherein pin holes are provided on a lower surface of the main control module and a lower surface of each of the battery modules; positioning pins mated with the corresponding pin holes are disposed on an upper surface of the base and an upper surface of each of the battery modules;
each of the positioning pins is configured with a locking hole; threaded locking members are disposed on the main control module and each of the battery modules; and each of the threaded locking members extends into the pin hole of the main control module or the battery module where the threaded locking member is located and is mated with the locking hole of the positioning pin in the pin hole.

8. The power cabinet according to claim 7, wherein
a side surface of the main control module and a side surface of each of the battery modules are configured with accommodating grooves for accommodating corresponding threaded locking members; and
plugs configured to block the corresponding accommodating grooves are disposed on the side surface of the main control module and the side surface of each of the battery modules.

9. The power cabinet according to claim 7 or 8, wherein an outer peripheral surface of the positioning pin is configured with a flat surface; and the locking hole is formed on the flat surface.

10. The power cabinet according to any of claims 1 to 9, wherein
a hot plug male terminal is disposed on the lower surface of the main control module and the lower surface of each of the battery modules; a hot plug female terminal mated with the corresponding hot plug male terminal is disposed on the upper surface of the base and the upper surface of each of the battery modules;
a slot configured to accommodate the corresponding hot plug male terminal is provided on the lower surface of the main control module and the lower surface of each of the battery modules; and a fence surrounding the corresponding hot plug female terminal and extending into the corresponding slot is disposed on the upper surface of the base and the upper surface of each of the battery modules.
